(19) Europäisches Patentamt / European Patent Office / Office européen des brevets

(11) **EP 4 377 722 B1**

(12) **FASCICULE DE BREVET EUROPEEN**

(45) Date de publication et mention de la délivrance du brevet:
**04.12.2024  Bulletin 2024/49**

(21) Numéro de dépôt: **22798127.1**

(22) Date de dépôt: **04.10.2022**

(51) Classification Internationale des Brevets (IPC):
**G01V 3/10** *(2006.01)*

(52) Classification Coopérative des Brevets (CPC):
**G01V 3/10**

(86) Numéro de dépôt international:
**PCT/EP2022/077603**

(87) Numéro de publication internationale:
**WO 2023/012377 (09.02.2023 Gazette 2023/06)**

(54) **DÉTECTEUR DE MÉTAL À ARCHITECTURE ÉCHANTILLONNÉE**

METALLDETEKTOR MIT ABTASTARCHITEKTUR

METAL DETECTOR WITH SAMPLED ARCHITECTURE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **04.10.2021  FR 2110487**

(43) Date de publication de la demande:
**05.06.2024  Bulletin 2024/23**

(73) Titulaire: **Xplorer**
**31230 Castanet Tolosan (FR)**

(72) Inventeur: **SCHIAVINATO, David**
**31230 Castanet Tolosan (FR)**

(74) Mandataire: **A.P.I. Conseil**
**Technopôle Hélioparc**
**4, rue Jules Ferry**
**64000 Pau (FR)**

(56) Documents cités:
| | |
|---|---|
| US-A1- 2009 045 813 | US-A1- 2009 045 813 |
| US-A1- 2019 238 152 | US-A1- 2019 238 152 |
| US-A1- 2019 377 100 | US-A1- 2019 377 100 |
| US-A1- 2020 350 787 | US-A1- 2020 350 787 |

## Description

### Domaine technique

L'invention concerne le domaine technique de la détection magnétique. En particulier, elle concerne un détecteur de métal pour la détection d'au moins un objet métallique exposé à un champ magnétique de détection.

### Technique antérieure

On utilise principalement les détecteurs de métaux dans le domaine de la sécurité, dans les aéroports pour détecter des armes cachées sur les passagers d'un avion, dans le domaine militaire pour le déminage, dans les loisirs pour la recherche de divers objets enfouis, ou en archéologie pour la recherche d'objets anciens.

Parmi les familles de détecteurs de métaux les plus répandus, on distingue essentiellement les détecteurs de métaux, dits « passifs » et les détecteurs de métaux, dits « actifs ».

Les détecteurs de métaux passifs captent et évaluent les déformations du champ magnétique terrestre. Tandis que les détecteurs de métaux actifs produisent pendant leur phase d'émission un champ électromagnétique qui induit des courants de Foucault dans les métaux.

Nous présenterons succinctement un exemple de détecteur de métal passif avant de présenter des exemples de détecteurs actifs, qui font l'objet de l'invention.

Le magnétomètre est un détecteur passif qui n'émet aucun signal. En particulier, il détecte les accidents d'homogénéité, en considérant que le champ magnétique terrestre est homogène par nature. Ainsi, toute particule métallique, magnétisée par le champ terrestre, perturbe plus ou moins intensément cette homogénéité, en fonction de sa taille, de sa position et de ses propriétés métallurgiques. Le principe de base d'un magnétomètre repose sur deux bobinages qui sont sensibles aux champs magnétiques et qui sont montés en opposition de phase, de façon à donner du champ magnétique une mesure électrique nulle. Si l'une des bobines rencontre un champ perturbateur, la différence cesse d'être nulle, ce qui fait naître une tension, qui permet de localiser et discriminer un objet métallique.

Les détecteurs actifs comprennent notamment les détecteurs à battement de fréquence(« Beat Frequency Oscillator», BFO, en anglais), les détecteurs à balance d'induction (« Induction Balance », IB, en anglais) et les détecteurs à induction pulsée (« Pulse Induction », PI, en anglais).

Dans un détecteur BFO, on utilise un oscillateur, qui est un circuit résonnant, avec la bobine du capteur comme inductance. La présence d'objet métallique modifie l'inductance et donc la fréquence de l'oscillateur. L'analyse de cette fréquence par mélange avec une fréquence voisine permet d'indiquer la présence de métaux. Dans ce cas, la bobine du capteur joue le rôle d'émetteur et de récepteur simultanément.

Dans un détecteur IB, on utilise au moins deux bobines. L'une est appelée émettrice et est alimentée par un générateur électrique répétitif, tandis que l'autre est le récepteur. Les deux bobines sont agencées de telle sorte que leur couplage mutuel (leur induction mutuelle) soit nul (ou le plus faible possible). Contrairement à un transformateur électrique, pour lequel on s'arrange pour que le couplage entre les deux bobines (primaire et secondaire) soit maximum, la bobine de réception ne délivre idéalement aucun signal lorsque la bobine d'émission est en fonction. La construction de la balance d'induction repose sur les propriétés de symétrie du champ magnétique induit par les bobines. Dès qu'un objet métallique baigne dans le champ magnétique, l'équilibre est rompu et la bobine de réception délivre un signal. Ce signal est déphasé par rapport au champ d'excitation. L'analyse de sa phase et/ou de son gain permet de détecter la présence et la nature d'objets métalliques. Ce détecteur est très répandu pour ses caractéristiques intéressantes. On le trouve souvent chez les chercheurs de métal précieux, la prospection de plage et en bâtiment pour la recherche de canalisations ou de chemins de câbles enfouis.

Enfin, un détecteur PI fonctionne en deux temps. Dans une première phase, on induit un champ magnétique impulsionnel. Il s'agit le plus souvent d'une approximation d'une véritable impulsion (Dirac). Les pièces métalliques embrassées par le champ sont le siège de courants de Foucault. Dès que l'excitation prend fin, les courants de Foucault relaxent (décroissent dans le temps pour atteindre une valeur nulle). Ces courants de Foucault induisent un champ magnétique, le champ secondaire ou rétro induit, qui est mesuré par le détecteur pendant la seconde phase, dite d'écoute. La tension induite aux bornes de la bobine est extrêmement faible pendant cette phase, typiquement de quelques mV à moins de 1 $\mu$V. Usuellement, les détecteurs mettent en oeuvre un mécanisme de moyenne qui cumule le signal sur plusieurs impulsions pour améliorer le rapport signal sur bruit. Le détecteur transcrit cette valeur moyenne par un signal audio. Ce détecteur est caractérisé par une très faible sensibilité aux corps ferromagnétiques (dès lors qu'ils sont faiblement conducteurs, comme les oxydes de fer), et une meilleure sensibilité aux autres. Une seule bobine peut jouer le rôle d'émettrice et de réceptrice ou elles peuvent être séparées. La complexité accrue du circuit périphérique de lecture et d'interprétation du signal rend le coût de ce capteur plus important. Parmi les applications de ce détecteur, on peut citer la recherche aurifère et le déminage.

En d'autres termes, afin de localiser et discriminer un objet métallique dans une zone de surveillance donnée, les détecteurs de métaux actifs utilisent un système d'émetteur-récepteur (avec une ou plusieurs bobines) qui exploite le phénomène physique d'induction magnétique.

En pratique, on configure un émetteur pour transmettre, par une bobine émettrice, un champ magnétique primaire, qui dépend du temps, dans la zone de surveillance. Puis, on configure un récepteur pour mesurer, par une bobine réceptrice, des champs magnétiques secondaires qui résultent des courants de Foucault induits dans tout objet métallique (on parle également de « magnétisation rémanente ») présent dans une zone d'influence du champ magnétique primaire.

Grâce à ce système, la détection de champs magnétiques secondaires à l'intérieur d'une zone de surveillance indique la présence d'au moins un objet métallique à l'intérieur de la zone de surveillance.

En pratique, l'opération de détection consiste à filtrer, amplifier, démoduler et discriminer, au niveau du récepteur, un signal réel de réception qui varie en fonction du temps et que la bobine réceptrice reçoit.

De façon générale, on peut réaliser l'opération de démodulation pour une discrimination dans le domaine fréquentiel (on parle alors de détecteur FD pour « Frequency Domain », en anglais) ou dans le domaine temporel (on parle alors de détecteur TD pour « Time Domain », en anglais).

Dans le cas particulier d'un détecteur FD, l'émetteur alimente généralement une bobine émettrice par un ou plusieurs courants alternatifs sinusoïdaux pour établir un ou plusieurs champs magnétiques alternatifs émis sur une ou plusieurs fréquences d'émission (on parle alors de détecteur sinusoïdal ou CW pour « Continuous Wave », en anglais). Ainsi, un récepteur de détecteur FD réalise l'opération de démodulation par la discrimination de l'amplitude et de la phase d'une ou plusieurs fréquences de détection qui sont sensiblement égales à la ou les fréquences d'émission.

Un récepteur CW peut recevoir un signal de réception dans un canal de détection ou plusieurs canaux de détection.

On entend par « canal de détection », une plage de fréquences d'ondes électromagnétiques.

De manière connue, chaque canal de détection présente une fréquence de détection spécifique, $f_D$, (également appelée « fréquence porteuse » ou « carrier frequency », en anglais) qui correspond à la fréquence centrale de la plage de fréquences du canal de détection.

Dans un premier exemple, la ou les fréquences de détection sont choisies parmi la bande de fréquence VLF (« very low frequency », en anglais).

On entend par signal VLF, une bande de fréquences dite « très basse fréquence », à savoir, environ comprise entre 3 kHz et 30 kHz.

Dans un deuxième exemple, la ou les fréquences de détection sont choisies parmi la bande de fréquence eVLF (« extended very low frequency », en anglais).

On entend par signal eVLF, une bande de fréquences dite « très basse fréquence étendue », à savoir, environ comprise entre 20 Hz et 200 kHz.

Classiquement, on appelle « bande passante » d'un canal de détection, la largeur de la plage de fréquences du canal de détection qui est comprise entre une fréquence minimale et une fréquence maximale.

En pratique, on dit que la bande passante du canal de détection est « étroite », car la fréquence centrale du canal de détection est très grande par rapport à la bande passante du signal de réception. Par exemple, dans le domaine des détecteurs de métaux, la bande passante d'un canal de détection est déterminée par la vitesse de déplacement relatif des cibles par rapport au détecteur et n'excède que rarement 100 Hz.

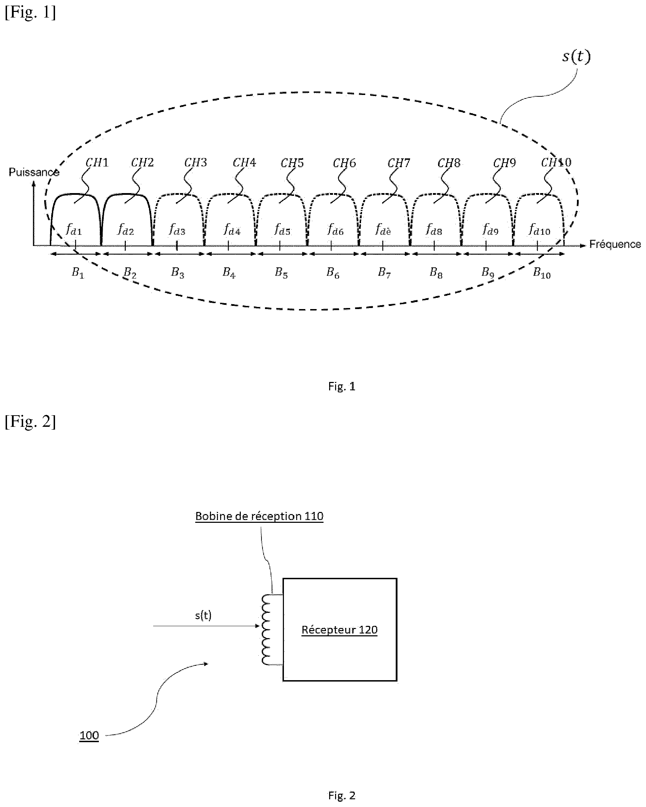

La figure 1 illustre un spectre de fréquences de réception d'un signal réel de réception s(t) tel que reçu par une bobine réceptrice d'un détecteur de métal. Dans l'exemple de la figure 1, le signal de réception s(t) est reçu dans dix canaux canal *CH1* à canal *CH10*. En particulier, chaque canal *CH1* à *CH10* présente une première fréquence de détection correspondante $f_{d1}$ à $f_{d10}$ et une bande passante correspondante $B_1$ à $B_{10}$. Dans la pratique, les bandes passantes $B_1$ à $B_{10}$ sont égales.

En pratique, pour faciliter l'opération de démodulation, on s'arrange pour obtenir un signal de réception qui présente deux voies distinctes (on parle alors de « signal IQ », avec I la composante en phase et Q la composante en quadrature). L'un des avantages d'une telle forme de signal est qu'elle est représentative de l'ensemble du spectre d'un signal de réception sans perte d'information. Par ailleurs, dans un détecteur, les composantes I et Q permettent de déterminer la part réactive et la part résistive d'un objet métallique, et ce, de manière à permettre l'identification du métal qui constitue l'objet métallique.

Dans un exemple, les deux voies du signal IQ sont en quadrature de phase. En pratique, un signal IQ est un signal complexe qui s'exprime sous la forme mathématique suivante :

[Math 1]

$$Signal\ IQ = A * \exp(j * \alpha)$$

avec $A$ son amplitude et $\alpha$ sa phase.

On peut alors décomposer la formule [Math 1] comme suit :

[Math 2]

$$Signal\ IQ = A * \cos(\alpha) + j * A * \sin(\alpha).$$

La formule [Math 2] peut enfin se simplifier comme suit :

[Math 3]

$$Signal\ IQ = I + jQ$$

avec $I = A * \cos(\alpha)$ et $Q = A * \cos(\alpha)$.

Enfin, avec un signal IQ qui est représenté par la formule [Math 3], on peut aisément récupérer l'amplitude et la phase.

En effet, on obtiendra l'amplitude grâce à la formule suivante :

[Math 4]

$$A = \sqrt{(I^2 + Q^2)} = |I + j * Q|.$$

En outre, on obtiendra la phase grâce à l'une des formules suivantes :

[Math 5]

$$\alpha[\pi] = \arctan\left(\frac{Q}{I}\right)$$

avec [·] qui est la fonction modulo ;

[Math 6]

$$\alpha = arg(I + j * Q) = atan2(I, Q)$$

avec *atan*2(·) qui est une fonction connue qui retourne l'Arc Tangente du rapport de deux variables x et y, exprimé en radians, entre $-\pi$ et $\pi$ (inclus).

Bien sûr, on peut également envisager d'utiliser une autre base bijective que la séparation en quadrature, notamment en utilisant un écart de phase différent de

$$\frac{\pi}{2}.$$

Dans un exemple de détecteur CW de l'art antérieur, un signal réel de réception s(t) monofréquence se présente sous la forme mathématique suivante :

[Math 7]

$$s(t) = A(t) * cos(2 \times \pi \times f_D \times t + \alpha(t)),$$

avec $A$ son amplitude, $f_D$ sa fréquence de détection, *t* le temps, et $\alpha$ sa phase.

Dans le cas d'un signal de réception multifréquence, celui-ci correspond à une somme de plusieurs signaux de réception s(t) monofréquence.

Pour simplifier la formule [Math 7], il est courant de comprimer $2 \times \pi \times f_D$ en $\omega$, avec $\omega$ qui correspond à la pulsation angulaire du signal, qui est presque invariant dans le temps. Dans ce cas, on peut réécrire la formule [Math 7], comme suit :

[Math 8]

$$s(t) = A(t) * cos(\omega * t + \alpha(t))$$

Puis, on extrait séparément les voies I et Q de $s(t)$.

Pour extraire la voie I, on effectue l'opération suivante :

[Math 9]

$$2 * \sin(-\omega \cdot t) * s(t) = A(t) * \sin(\varphi(t)) + A(t) * \sin(2 \cdot \omega \cdot t + \varphi(t))$$

Puis, on applique un filtre passe-bas au résultat de la formule [Math 9] qui rejette les signaux à la fréquence $2 \times f_D$ pour obtenir

$$I = A(t) * \sin(\varphi(t)).$$

Pour extraire la voie Q, on effectue l'opération suivante :

[Math 10]

$$2 * \cos(-\omega \cdot t) * s(t) = A(t) * \cos(\varphi(t)) + A(t) * \cos(2 \cdot \omega \cdot t + \varphi(t))$$

Puis, on applique un filtre passe-bas au résultat de la formule [Math 10] qui rejette les signaux à la fréquence $2 \times f_D$ pour obtenir

$$Q = A(t) * \cos(\varphi(t)).$$

US 2019/377100 A1 divulgue un détecteur de métal de pipeline.

De manière connue, pour faciliter les calculs dans un système numérique, on stocke en mémoire les différentes valeurs que peuvent prendre les fonctions $cos(\cdot)$ et $sin(\cdot)$. Puis, on réalise les multiplications grâce à des mélangeurs. Or, une telle architecture est gourmande en termes de mémoire et de puissance de calcul à mobiliser.

Ainsi, il existe un besoin pour proposer une solution alternative de démodulation qui est peu gourmande en termes de mémoire et de puissance de calcul à mobiliser.

**Résumé de l'invention**

L'invention vise à résoudre, au moins partiellement, ces besoins.

L'invention vise en particulier un détecteur de métal pour la détection d'au moins un objet métallique exposé à un champ magnétique de détection.

En particulier, le détecteur de métal comprend :

- au moins une bobine de réception agencée pour recevoir un signal de champ magnétique, dit signal de réception, $s(t)$, qui est représentatif d'au moins une modification du champ magnétique de détection sous l'influence de l'objet métallique, le signal de réception, $s(t)$, comprenant au moins un canal de détection de largeur de bande prédéterminée, chaque canal de détection étant associé à une fréquence de détection distincte, $f_D$ et
- au moins un récepteur à architecture échantillonnée qui est couplé à la bobine de réception, dans lequel,
- le récepteur à architecture échantillonnée comprend un premier dispositif d'échantillonnage du type non-quantificateur, dit premier échantillonneur, qui est configuré pour échantillonner le signal de réception, $s(t)$, ou un signal dérivé du signal de réception, $|s(t)|$, $|s(t)^*|$, $|s'[t]|$, $|s'[t]^*|$, $|s'_+[t]|$ , à une première fréquence d'échantillonnage, $f1$, qui respecte le théorème d'échantillonnage passe-bande de Nyquist-Shannon, de manière à
- délivrer un signal à temps discret, dit premier signal échantillonné, $s[t]$, qui, dans le domaine spectral, correspond à un signal de réplique du signal de réception, $s(t)$, ou du signal dérivé du signal de réception, $s'[t]$, et

- transposer en fréquence le signal de réception, $s(t)$, à une première fréquence intermédiaire qui est inférieure à la fréquence de détection, $f_D$.

Dans un premier mode de réalisation, le récepteur à architecture échantillonnée comprend, en outre, un dispositif de conversion réel-complexe qui est couplé en aval du premier échantillonneur, et qui est configuré pour convertir le premier signal échantillonné, $s[t]$, $s''[t]$, en un signal complexe, $s[t]^*$, $s''[t]^*$ qui présente une composante en phase, $I[t]$, et une composante en quadrature, $Q[t]$.

Dans une mise en oeuvre du premier mode de réalisation, la première fréquence d'échantillonnage, $f1$, respecte la relation suivante :

$$ f_D \approx \left(\frac{2*n+1}{4}\right) \times f1, $$

avec $f_D$ la fréquence de détection du canal de détection du signal de réception $s(t)$, $n$ un entier naturel et $f1$ la première fréquence d'échantillonnage.

Par ailleurs, dans cette mise en oeuvre du premier mode de réalisation, le dispositif de conversion réel-complexe comprend un premier mélangeur à temps discret, un deuxième mélangeur à temps discret, un filtre passe-bas à temps discret, le filtre passe-bas à temps discret étant couplé,

- en aval du premier mélangeur à temps discret de manière à délivrer la composante de phase, $I[t]$, et
- en aval du deuxième mélangeur à temps discret de manière à la composante de quadrature, $Q[t]$.

Dans un deuxième mode de réalisation, le récepteur à architecture échantillonnée comprend, en outre, un filtre anti-repliement à temps continu qui est couplé en amont du premier échantillonneur, le filtre anti-repliement à temps continu présentant une bande passante qui est configurée pour être centrée sur au moins l'une quelconque des fréquences de détection associées au signal de réception, $s(t)$, de manière à limiter la bande passante du signal de réception, $s(t)$, autour d'au moins l'une quelconque des fréquences de détection et délivrer un signal de réception filtré, $|s(t)|$.

Dans un troisième mode de réalisation, le récepteur à architecture échantillonnée comprend, en outre,

- un deuxième dispositif d'échantillonnage du type non-quantificateur, dit deuxième échantillonneur couplé en amont du premier échantillonneur, et
- un filtre anti-repliement à temps discret couplé entre le premier échantillonneur et le deuxième échantillonneur.

Par ailleurs, dans ce troisième mode de réalisation,

- le deuxième échantillonneur est configuré pour échantillonner le signal de réception, $s(t)$, à une deuxième fréquence d'échantillonnage, $f2$, qui respecte le théorème d'échantillonnage passe-bande de Nyquist-Shannon, de manière à délivrer un signal dérivé du signal de réception, dit deuxième signal échantillonné, $s'[t]$, qui, dans le domaine spectral, correspond à un signal de réplique du signal de réception, $s(t)$, et

- le filtre anti-repliement à temps discret présente une bande passante qui est configurée pour être centrée sur au moins l'une quelconque des fréquences de détection associées au signal de réception, $s(t)$, de manière à limiter la bande passante du deuxième signal échantillonné, $s'[t]$, autour d'au moins l'une quelconque des fréquences de détection et délivrer un signal de réception échantillonné et filtré, $|s'[t]|$.

Enfin, dans ce troisième mode de réalisation, la deuxième fréquence d'échantillonnage, $f2$, est en outre configurée pour transposer en fréquence le signal de réception, $s(t)$, à une deuxième fréquence intermédiaire qui est supérieure à la première fréquence intermédiaire et inférieure ou égale à la fréquence de détection, $f_D$.

Dans une mise en oeuvre du troisième mode de réalisation, le détecteur de métal comprend, en outre, un dispositif de suréchantillonnage du type non-quantificateur, dit suréchantillonneur couplé entre le deuxième échantillonneur et le filtre anti-repliement à temps discret.

Dans une mise en oeuvre particulière du deuxième mode de réalisation et du troisième mode de réalisation, le filtre anti-repliement à temps continu et/ou le filtre anti-repliement à temps discret est un filtre du type passe-bande complexe qui est configuré pour convertir le signal de réception, $s(t)$, ou un signal dérivé du signal de réception, $s'[t]$, en un signal complexe filtré, $|s(t)^*|$, $|s'[t]^*|$, qui présente une composante en phase, $I[t]$, et une composante en quadrature, $Q[t]$.

Dans un quatrième mode de réalisation, le récepteur à architecture échantillonnée comprend, en outre, un quantificateur et un codeur, le quantificateur étant configuré pour quantifier le premier signal échantillonné, $s[t]$, et/ou le deuxième signal échantillonné, $s'[t]$, de manière à délivrer un signal quantifié, le codeur étant configuré pour coder le signal quantifié de manière à délivrer un signal numérique.

Dans un cinquième mode de réalisation, la ou les fréquences de détection sont choisies parmi : la bande de fréquences VLF et la bande de fréquences eVLF.

Dans un sixième mode de réalisation, le détecteur de métal comprend, en outre, au moins une bobine d'émission agencée pour générer le champ magnétique de détection.

Dans un septième mode de réalisation, le détecteur de métal comprend, en outre, plusieurs récepteurs à architecture échantillonnée, dans lequel chaque récepteur à architecture échantillonnée est configuré pour traiter le signal de réception, s(t), à une fréquence de détection particulière, $f_D$.

Dans un huitième mode de réalisation, le détecteur de métal comprend, en outre, des moyens pour sélectionner, de manière automatique ou sur commande de l'utilisateur, la ou les fréquence(s) de détection.

Dans un neuvième mode de réalisation, le détecteur de métal comprend, en outre,

- une canne support,
- une tête de détection qui est disposée à une extrémité de la canne support, et qui est configurée pour loger la ou les bobine(s) de réception et/ou la ou les bobine(s) d'émission, et
- au moins un processeur couplé à la tête de détection et configuré pour gérer le fonctionnement de la tête de détection et exploiter les informations qui en sont issues.

## Brève description des dessins

D'autres caractéristiques et avantages de l'invention seront mieux compris à la lecture de la description qui va suivre et en référence aux dessins annexés, donnés à titre illustratif et nullement limitatifs.

[Fig. 1] La figure 1 représente un spectre de deux fréquences de réception d'un signal réel de réception.
[Fig. 2] La figure 2 représente un détecteur de métal.
[Fig. 3] La figure 3 représente un récepteur du détecteur de métal de la figure 2 selon l'invention.
[Fig. 4] La figure 4 représente une illustration du théorème d'échantillonnage passe-bande de Nyquist-Shannon.
[Fig. 5] La figure 5 représente un dispositif de conversion réel-complexe du récepteur de la figure 4.
[Fig. 6] La figure 6 représente un mode de réalisation d'un récepteur du détecteur de métal de la figure 2.
[Fig. 7] La figure 7 représente une variante du mode de réalisation de la figure 6.
[Fig. 8] La figure 8 représente un autre mode de réalisation d'un récepteur du détecteur de métal de la figure 2.
[Fig. 9] La figure 9 représente une première variante du mode de réalisation de la figure 8.
[Fig. 10] La figure 10 représente une deuxième variante du mode de réalisation de la figure 8.
[Fig. 11] La figure 11 représente une troisième variante du mode de réalisation de la figure 8.

Sur les différentes figures, les traits et flèches en pointillés indiquent des éléments, des étapes et des enchainements facultatifs ou optionnels.

## Description des modes de réalisation

L'un des objectifs de cette invention est de fournir un détecteur de métal qui propose une solution alternative de démodulation qui est peu gourmande en termes de mémoire et de puissance de calcul à mobiliser

Pour cela, l'inventeur propose un détecteur de métal qui utilise un récepteur à architecture échantillonnée dans laquelle on réalise une transposition de fréquence par un sous-échantillonnage qui exploite de manière contrôlée le repliement de spectre (ce qui signifie que ne l'on ne cherche pas à éviter le repliement de spectre) en utilisant le théorème d'échantillonnage passe-bande de Nyquist-Shannon.

Ainsi, contrairement à l'art antérieur, il n'est pas nécessaire d'utiliser un mélangeur (c.-à-d. qui réalise une multiplication d'un signal de réception avec un oscillateur local) pour réaliser une transposition en fréquence.

Or, il est connu que l'utilisation d'un mélangeur dans l'architecture de récepteur, est gourmande en termes de mémoire et/ou de puissance de calcul

En particulier, dans un récepteur à architecture échantillonnée, on sépare l'opération d'échantillonnage des opérations de quantification et de codage. En comparaison, dans les architectures classiques, ces trois opérations sont habituellement réalisées en parallèle au niveau d'un convertisseur analogique numérique (CAN ou « analog to digital converter », ADC, en anglais).

Dans le cadre d'une architecture échantillonnée, on réalise l'échantillonnage directement sur le signal de réception et on réalise la majorité du traitement de signal en temps discret (p. ex. par l'utilisation de systèmes à capacités commutées avec des interrupteurs MOS pour la commutation).

On entend par « temps discret », un domaine de valeurs représentatives du temps qui est défini par un ensemble dénombrable dans une fenêtre de temps finie. Pour simplifier la compréhension du document, nous considérerons que la période du temps discret est fixe.

Dans la description, nous considérerons que le détecteur de métal selon l'invention est un détecteur FD.

Ainsi, l'invention concerne un détecteur de métal pour la détection d'au moins un objet métallique.

Dans l'invention, l'objet métallique est exposé à un champ magnétique de détection, tel que celui généré par une bobine d'émission d'un détecteur de métal.

En particulier, le champ magnétique de détection permet de magnétiser un objet métallique.

Dans l'invention, le détecteur de métal comprend au moins une bobine de réception et au moins un récepteur que l'on couple à la bobine de réception.

Ainsi, l'invention couvre également un détecteur de métal qui comprend deux ou plusieurs bobines de réception et/ou deux ou plusieurs récepteurs.

Bien sûr, l'invention couvre également un système multicanal (c.-à-d. multifréquences) qui comprendrait plusieurs récepteurs selon l'invention.

Ainsi, l'invention couvre un détecteur de métal multicanal qui utilise deux, trois, quatre, cinq ou plus de fréquences de détection.

La figure 2 illustre un détecteur de métal 100 qui comprend une bobine de réception 110 et un récepteur à architecture échantillonnée 120.

En particulier, la bobine de réception 110, de type connu, est agencée pour recevoir un signal de champ magnétique, dit signal de réception.

En particulier, on configure la bobine de réception 110 pour capter la magnétisation rémanente de l'objet métallique après sa magnétisation par une bobine d'émission (non représentée).

La figure 2 illustre la bobine de réception 110 qui reçoit un signal de réception $s(t)$ avec $t$ qui représente le temps.

En pratique, le signal de réception $s(t)$ est un signal analogique réel à temps continu.

On entend par « temps continu », un domaine de valeurs représentatives du temps qui est défini par un ensemble indénombrable dans une fenêtre de temps finie.

Par ailleurs, le signal de réception $s(t)$ est représentatif d'au moins une modification du champ magnétique de détection sous l'influence de l'objet métallique.

En d'autres termes, l'objet métallique modifie le champ magnétique de détection et le signal de réception $s(t)$ module cette modification du champ magnétique.

De manière connue, on amplifie le signal de réception $s(t)$ avec un amplificateur à faible bruit (« Low Noise Amplifier, LNA, en anglais) avant de délivrer le signal de réception amplifié au récepteur à architecture échantillonnée 120.

Dans l'invention, le récepteur à architecture échantillonnée 120 comprend un premier dispositif d'échantillonnage du type non-quantificateur, dit premier échantillonneur.

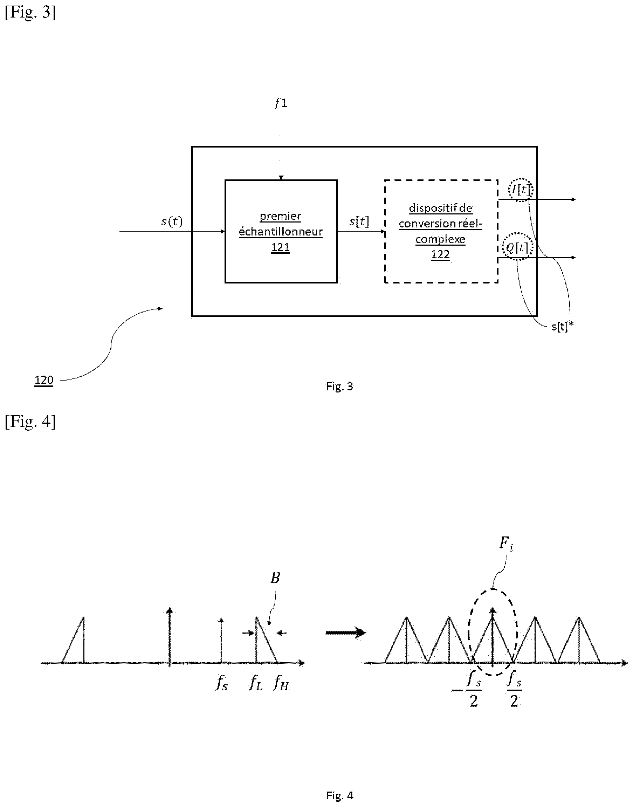

La figure 3 illustre un récepteur à architecture échantillonnée 120 qui comprend un premier échantillonneur 121.

En pratique, le premier échantillonneur 121 est un dispositif d'échantillonnage de type connu, mais qui ne comprend pas obligatoirement l'opération de quantification ni l'opération de codage.

Par exemple, le premier échantillonneur 121 peut être un échantillonneur-bloqueur (« sample and hold circuit », en anglais) qui est dépourvu de l'opération de quantification et de l'opération de codage.

Dans l'invention, le premier échantillonneur 121 est configuré pour échantillonner le signal de réception $s(t)$ à une première fréquence d'échantillonnage qui respecte le théorème d'échantillonnage passe-bande de Nyquist-Shannon (« Bandpass sampling » ou « undersampling » ou « subsampling » ou « downsampling » ou « sub-Nyquist » ou « super-Nyquist» ou « harmonie sampling », en anglais).

Pour rappel, le théorème d'échantillonnage passe-bande de Nyquist-Shannon est une extension du théorème Nyquist-Shannon « classique » pour s'appliquer à un signal à bande étroite. À savoir, que l'on réalise l'échantillonnage en fonction de la bande passante au lieu de la fréquence maximale du signal de réception $s(t)$.

La figure 4 illustre ce théorème pour un signal passe-bande qui est borné entre $f_L$ et $f_H$.

En pratique, ce théorème énonce qu'il est possible de reconstruire un signal si la fréquence d'échantillonnage $f_S$ du signal est au moins égale au double de la largeur de la bande passante $B$ du signal (c.-à-d., la bande de fréquences comprise entre $f_L$ et $f_H$). Ainsi, selon ce théorème, on peut intentionnellement replier spectralement le signal de sorte qu'au moins une de ses répliques spectrales se trouve transposée à une fréquence intermédiaire ou en bande de base. En pratique, le signal utile est transposé en fréquence intermédiaire $F_i$, entre la bande de base et la moitié de la fréquence d'échantillonnage (c.-à-d., $\pm \dfrac{f_S}{2}$ ).

En d'autres termes, le théorème d'échantillonnage passe-bande de Nyquist-Shannon permet de transposer ou de démoduler un signal à bande étroite autour d'une fréquence prédéterminée en effectuant un échantillonnage à une fréquence d'échantillonnage plus faible que la fréquence prédéterminée, à condition que la fréquence d'échantillonnage soit supérieure à au moins deux fois la bande passante du signal pour un signal réel et à au moins une fois la bande passante pour un signal complexe. En effet, le spectre d'un signal échantillonné de la sorte se trouve répété, sans superpositions, autour de multiples de la fréquence d'échantillonnage. Parmi ces répliques, celles qui se trouvent en bande de base ou sont proches de la bande de base, permettent de réaliser une démodulation du signal passe-bande sans utiliser de mélangeur.

Par extension, on notera que dans le cas d'utilisation par l'invention du théorème d'échantillonnage passe-bande de Nyquist-Shannon, il est nécessaire que la fréquence d'échantillonnage $f_S$ soit inférieure à la fréquence de détection $f_D$ pour qu'une réplique subisse une transposition en fréquence.

Dans une première mise en oeuvre particulière, on respecte la condition suivante,

$$f_S \leq 2 \times f_D.$$

Dans un premier aspect de la première mise en oeuvre particulière, on respecte la condition suivante, $f_S \leq f_D$.

Dans un deuxième aspect de la première mise en oeuvre particulière, on respecte la condition suivante, $f_S < f_D$.

Dans une deuxième mise en oeuvre particulière, on respecte la condition suivante, la valeur de la quantité

$2 \times \dfrac{f_D}{fs}$ n'est pas un entière.

Dans un aspect de la deuxième mise en oeuvre particulière, on respecte la condition suivante, la valeur de la

quantité $\dfrac{f_D}{fs}$ n'est pas un entière.

Ainsi, en pratique, dans l'invention il est nécessaire de respecter le théorème d'échantillonnage passe-bande de Nyquist-Shannon mais il ne faut surtout pas respecter le théorème d'échantillonnage de Nyquist-Shannon « classique ». En effet, si on respecte le théorème d'échantillonnage de Nyquist-Shannon « classique », il est impossible d'avoir une transposition de fréquence.

Dans le cadre de l'invention, la figure 3 illustre le premier échantillonneur 121 qui utilise une fréquence d'échantillonnage $f1$ qui est choisie de manière à respecter le théorème d'échantillonnage passe-bande de Nyquist-Shannon tel que décrit ci-dessus pour un signal réel.

En particulier, le choix de la première fréquence d'échantillonnage $f1$ permet au premier échantillonneur 121 de délivrer un signal à temps discret, dit premier signal échantillonné, qui, dans le domaine spectral, correspond à un signal de réplique du signal de réception $s(t)$.

Pour cela, dans l'invention, la fréquence d'échantillonnage $f1$ est strictement inférieure à la fréquence de détection, $f_D$.

En pratique, un signal de réplique comprend une réplique spectrale du signal de réception s(t).

La figure 3 illustre le premier échantillonneur 121 qui délivre un premier signal échantillonné $s[t]$, en réponse à la réception du signal de réception $s(t)$ et en fonction de la première fréquence d'échantillonnage $f1$.

En pratique, le premier signal échantillonné $s[t]$ est un signal échantillonné analogique à temps discret. Comme indiqué plus haut, un tel signal n'est pas encore quantifié, mais uniquement échantillonné. En comparaison, dans les architectures classiques, le signal analogique reste sur la base de temps continue jusqu'à la quantification dans un convertisseur analogique numérique.

En outre, le choix de la première fréquence d'échantillonnage $f1$, pour chaque canal de détection, permet au premier échantillonneur 121 de transposer en fréquence le signal de réception $s(t)$ à une première fréquence intermédiaire qui est inférieure à la fréquence de détection, $f_D$, du canal de détection.

En pratique, la première fréquence intermédiaire peut se trouver en bande de base.

Dans une première mise en oeuvre particulière de l'invention, il peut être avantageux d'utiliser des techniques de traitement de signal du premier signal échantillonné $s[t]$ qui sont flexibles et reconfigurables.

Pour cela, le récepteur à architecture échantillonnée 120 comprend, en outre, des moyens de traitement (non représentés) du premier signal échantillonné $s[t]$ qui utilisent des techniques de traitement de signal analogique à temps discret.

Par exemple, on pourra utiliser des systèmes à capacités commutées avec des interrupteurs MOS pour la commutation.

Dans une deuxième mise en oeuvre particulière de l'invention, il peut être avantageux de traiter numériquement le premier signal échantillonné $s[t]$, par exemple avec un processeur.

Pour cela, le récepteur à architecture échantillonnée 120 comprend en outre un quantificateur (non représenté) et un codeur (non représenté).

En particulier, le quantificateur, que l'on couple en aval du premier échantillonneur 121, est configuré pour quantifier le premier signal échantillonné s[t], de manière à délivrer un signal quantifié. En outre, le codeur, que l'on couple en aval du quantificateur, est configuré pour coder le signal quantifié de manière à délivrer un signal numérique.

Bien sûr, on pourra envisager de combiner le quantificateur et le codeur dans un seul dispositif, et ce, sans nécessiter de modifications substantielles de l'invention.

Dans une troisième mise en oeuvre particulière de l'invention, il peut être avantageux de convertir le premier signal échantillonné s[t] en un signal complexe du type *signal IQ,* et ce, afin de faciliter son traitement. Dans ce cas, le signal échantillonné s[t] sera de préférence à une fréquence intermédiaire.

Pour cela, comme illustré dans la figure 3, le récepteur à architecture échantillonnée 120 comprend, en outre, un dispositif de conversion réel-complexe 122 que l'on couple en aval du premier échantillonneur 121.

En particulier, le dispositif de conversion réel-complexe 122 est configuré pour convertir le premier signal échantillonné s[t], qui est un signal réel, en un signal complexe du type *signal IQ,* tel que décrit ci-dessus.

Dans la figure 3, le dispositif de conversion réel-complexe 122 délivre un signal complexe s[t]* en réponse à la réception du premier signal échantillonné s[t]. En particulier, le signal complexe s[t]* comprend une composante en phase *I*[t] et une composante en quadrature *Q*[t].

Bien sûr, on peut prévoir que le dispositif de conversion réel-complexe 122 délivre seulement la composante en phase *I*[t] et omet la composante en quadrature *Q*[t].

Dans un mode de réalisation de la troisième mise en oeuvre particulière de l'invention, il peut être avantageux d'utiliser une structure simple et efficiente pour le dispositif de conversion réel-complexe 122.

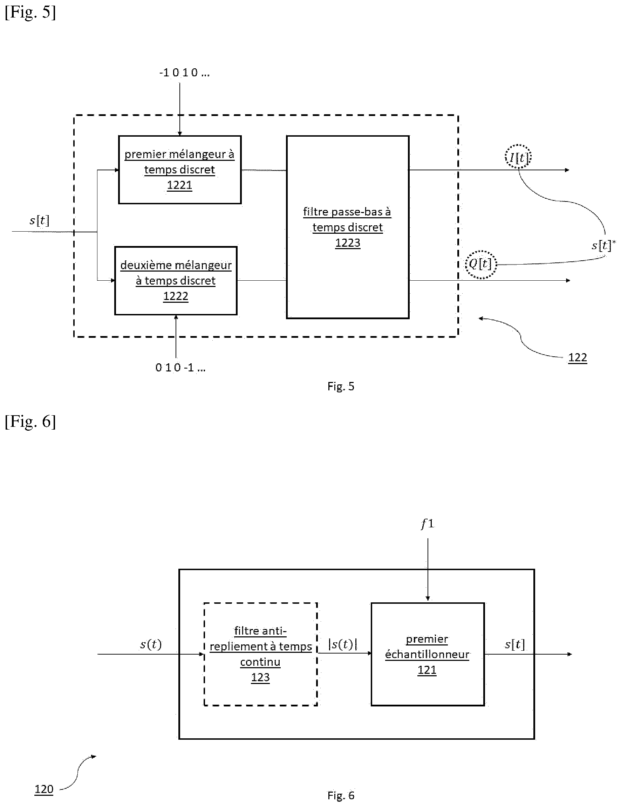

Pour cela, comme illustré sur la figure 5, le dispositif de conversion réel-complexe 122 comprend un premier mélangeur à temps discret 1221, un deuxième mélangeur à temps discret 1222, au moins un filtre passe-bas à temps discret 1223.

En pratique, le premier mélangeur à temps discret 1221 et le filtre passe-bas à temps discret 1223 sont configurés pour délivrer, pour chaque échantillon du premier signal échantillonné s[t], la composante en phase *I*[t] du signal complexe s[t]*. Tandis que le deuxième mélangeur à temps discret 1222 et le filtre passe-bas à temps discret 1223 sont configurés pour délivrer, pour chaque échantillon du premier signal échantillonné s[t], la composante en quadrature *Q*[t] du signal complexe s[t]*.

Bien entendu, on peut prévoir d'utiliser deux filtres passe-bas au lieu d'un seul. Dans ce cas, on pourra coupler un premier filtre passe-bas à temps discret en aval du premier mélangeur à temps discret 1221 pour obtenir la composante en phase *I*[t] du signal complexe s[t]*. Par ailleurs, on pourra coupler un deuxième filtre passe-bas à temps discret en aval du deuxième mélangeur à temps discret 1222 pour obtenir la composante en quadrature *Q*[t] du signal complexe s[t]*.

En outre, dans le mode de réalisation de la troisième mise en oeuvre particulière de l'invention, afin de réduire les ressources requises au niveau d'un processeur, il peut être avantageux d'optimiser le rapport entre la première fréquence d'échantillonnage *f*1 et la bande passante afin de pouvoir choisir la première fréquence d'échantillonnage *f*1 la plus faible possible.

Pour cela, on choisit de préférence la fréquence d'échantillonnage *f*1 de sorte qu'elle respecte la relation suivante :

[Math 11]

$$f_D \approx \left(\frac{2*n+1}{4}\right) \times f1$$

avec $f_D$ la fréquence de détection d'un canal de détection du signal de réception s(t), n' un entier naturel, *f*1 la première fréquence d'échantillonnage et *n* un entier naturel.

Dans un premier exemple de la formule [Math 11], on peut utiliser la relation suivante :

[Math 12]

$$f_D = \left(\frac{4*n+1}{4}\right) \times f1 = \left(\frac{1}{4} + n\right) \times f1$$

Dans ce cas, on parlera de configuration en « quart de bande ».

Dans un deuxième exemple de la formule [Math 11], on peut utiliser la relation suivante :

[Math 13]

$$f_D = \left(\frac{4*n+3}{4}\right) \times f1 = \left(\frac{3}{4} + n\right) \times f1$$

Dans ce cas, on parlera de configuration en « trois quarts de bande ».

Avec l'agencement selon la formule [Math 11] pour choisir la fréquence d'échantillonnage $f1$, on peut obtenir la composante en phase $I[t]$ et la composante en quadrature $Q[t]$ d'un signal complexe $s[t]^*$ en utilisant le premier mélangeur à temps discret et le deuxième mélangeur à temps discret avec seulement des coefficients de multiplication choisis parmi les facteurs suivants : -1, 0 et 1.

Par ailleurs, on peut envisager de réaliser des optimisations supplémentaires en exploitant, par exemple, les propriétés des facteurs de multiplication à zéro tous les deux échantillons. C'est particulièrement le cas pour certaines topologies de filtre à réponse impulsionnelle finie (« Finite Response Filter», FIR, en anglais).

Par ailleurs, on pourra utiliser d'autres techniques connues de conversion réel-complexe comme, la transformée de Hilbert, et ce, sans nécessiter de modifications substantielles de l'invention.

Dans une quatrième mise en oeuvre particulière de l'invention, il peut être avantageux de réduire la quantité de bruit repliée lors de l'échantillonnage réalisée par le premier échantillonneur 121. Par ailleurs, il peut être avantageux d'isoler le signal d'un canal de détection des autres canaux de détection si l'émetteur du détecteur de métal 100 transmet plusieurs fréquences simultanément.

Pour cela, le récepteur à architecture échantillonnée 120 comprend, en outre, un filtre anti-repliement à temps continu.

La figure 6 illustre un filtre anti-repliement à temps continu 123 que l'on couple en amont du premier échantillonneur 121.

En particulier, le filtre anti-repliement à temps continu 123 est configuré pour délivrer un signal de réception filtré $|s(t)|$ en réponse à la réception du signal de réception $s(t)$. Dans ce cas, le premier échantillonneur 121 délivre le premier signal échantillonné $s[t]$, en réponse à la réception du signal de réception filtré $|s(t)|$, qui est ainsi dérivé du signal de réception $s(t)$.

En outre, le filtre anti-repliement à temps continu 123 présente une bande passante qui est configurée pour être centrée sur au moins l'une quelconque des fréquences de détection associées au signal de réception $s(t)$, de manière à limiter la bande passante du signal de réception $s(t)$ autour d'au moins l'une quelconque des fréquences de détection.

Dans un premier mode de réalisation particulier (non représenté sur la figure 6) de la quatrième mise en oeuvre particulière de l'invention, on peut prévoir d'ajouter le dispositif de conversion réel-complexe 122 en aval du premier échantillonneur 121 pour convertir le premier signal échantillonné $s[t]$ en un signal complexe du type *signal IQ,* et ce, afin de faciliter son traitement.

Dans un deuxième mode de réalisation particulier de la quatrième mise en oeuvre particulière de l'invention, il peut être avantageux de faire l'économie du dispositif de conversion réel-complexe 122 décrit ci-dessus.

Pour cela, on peut choisir le filtre anti-repliement à temps continu 123 pour qu'il soit du type passe-bande complexe. Ainsi, en plus de réaliser l'opération de filtrage, un tel filtre est configuré pour filtrer les fréquences négatives. Le signal transposé par le premier échantillonneur 121 peut alors être transposé en un signal complexe du type *signal IQ,* tel que décrit ci-dessus. En effet, il n'y aura pas de repliement des fréquences négatives inhérentes aux signaux réels.

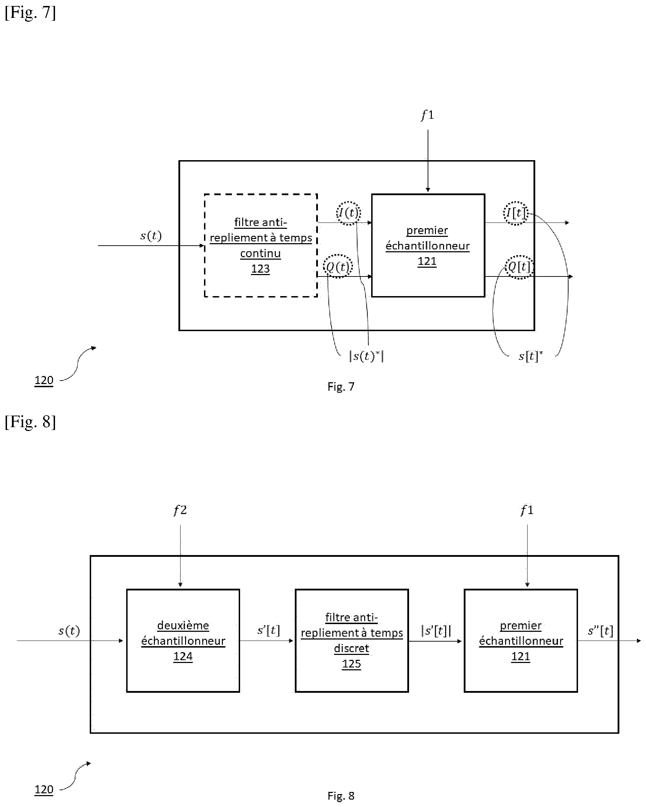

La figure 7 illustre un filtre anti-repliement à temps continu 123 du type passe-bande complexe, qui délivre un signal de réception complexe filtré $|s(t)^*|$, qui présente une composante en phase $I(t)$ et une composante en quadrature $Q[t]$, en réponse à la réception du signal de réception $s(t)$.

Par ailleurs, dans la figure 7, le premier échantillonneur 121 est configuré pour échantillonner le signal de réception complexe filtré $|s(t)^*|$ de manière à délivrer un signal échantillonné complexe $|s(t)^*|$ qui comprend une composante en phase $I[t]$ et la composante en quadrature $Q[t]$.

Dans une cinquième mise en oeuvre particulière de l'invention, il peut être avantageux de faciliter la configuration du filtre passe bande, notamment dans un système dont la fréquence de détection, $f_D$, est configurable et/ou dans un système multicanal (c.-à-d., multifréquences).

Pour cela, le récepteur à architecture échantillonnée 120 comprend, en outre, un deuxième dispositif d'échantillonnage du type non-quantificateur, dit deuxième échantillonneur et un filtre anti-repliement à temps discret.

La figure 8 illustre un filtre anti-repliement à temps discret 125 que l'on couple entre le premier échantillonneur 121 et un deuxième échantillonneur 124.

En pratique, le deuxième échantillonneur 124 est configuré pour échantillonner le signal de réception $s(t)$ à une deuxième fréquence d'échantillonnage qui respecte le théorème d'échantillonnage passe-bande de Nyquist-Shannon, comme décrit ci-dessus en référence à la première fréquence d'échantillonnage $f1$.

Dans une mise en oeuvre particulière, dans un système multicanal (c.-à-d., multifréquences), le deuxième échantillonneur 124 est commun à l'ensemble des canaux de réception.

La figure 8 illustre un deuxième échantillonneur 124 qui utilise une fréquence d'échantillonnage $f2$ qui est choisie de manière à respecter le théorème d'échantillonnage passe-bande de Nyquist-Shannon tel que décrit ci-dessus.

En particulier, le choix de la deuxième fréquence d'échantillonnage $f2$, permet au deuxième échantillonneur 124 de délivrer un signal à temps discret, dit deuxième signal échantillonné, qui, dans le domaine spectral, correspond à un signal de réplique du signal de réception $s(t)$.

Pour cela, dans l'invention, la fréquence d'échantillonnage $f2$ respecte le condition suivante, $f2 < 2 \times f_D$ est strictement inférieure à la fréquence de détection, $f_D$.

En pratique, un signal de réplique comprend une réplique spectrale du signal de réception $s(t)$.

La figure 8 illustre le deuxième échantillonneur 124 qui délivre un deuxième signal échantillonné $s'[t]$, en réponse à la réception du signal de réception $s(t)$ et en fonction de la deuxième fréquence d'échantillonnage $f2$.

En pratique, le deuxième signal échantillonné $s'[t]$, est un signal échantillonné analogique à temps discret, qui est dérivé du signal de réception $s(t)$. Comme indiqué plus haut, un tel signal n'est pas encore quantifié, mais uniquement échantillonné. En comparaison, dans les architectures classiques, le signal analogique reste sur la base de temps continue jusqu'à la quantification dans un convertisseur analogique numérique.

En outre, le choix de la deuxième fréquence d'échantillonnage $f2$, pour chaque canal de détection, permet au deuxième échantillonneur 124 de transposer en fréquence le signal de réception $s(t)$, à une deuxième fréquence intermédiaire qui est supérieure à la première fréquence intermédiaire et inférieure ou égale à la fréquence de détection, $f_D$.

Par ailleurs, le filtre anti-repliement à temps discret 125 est configuré pour délivrer un signal de réception échantillonné et filtré $|s'[t]|$ en réponse à la réception du deuxième signal échantillonné $s'[t]$, Par la suite, le premier échantillonneur 121 délivre un premier signal échantillonné $s''[t]$, en réponse à la réception du deuxième signal échantillonné et filtré $|s'[t]|$, qui est dérivé du signal de réception $s(t)$.

En outre, le filtre anti-repliement à temps discret 125 présente une bande passante qui est configurée pour être centrée sur au moins l'une quelconque des fréquences de détection associées au signal de réception $s(t)$, de manière à limiter la bande passante du deuxième signal échantillonné $s'[t]$, autour d'au moins l'une quelconque des fréquences de détection.

Dans un premier mode de réalisation de la cinquième mise en oeuvre particulière de l'invention, il peut être avantageux de convertir le premier signal échantillonné $s''[t]$ en un signal complexe du type *signal IQ*, et ce, afin de faciliter son traitement.

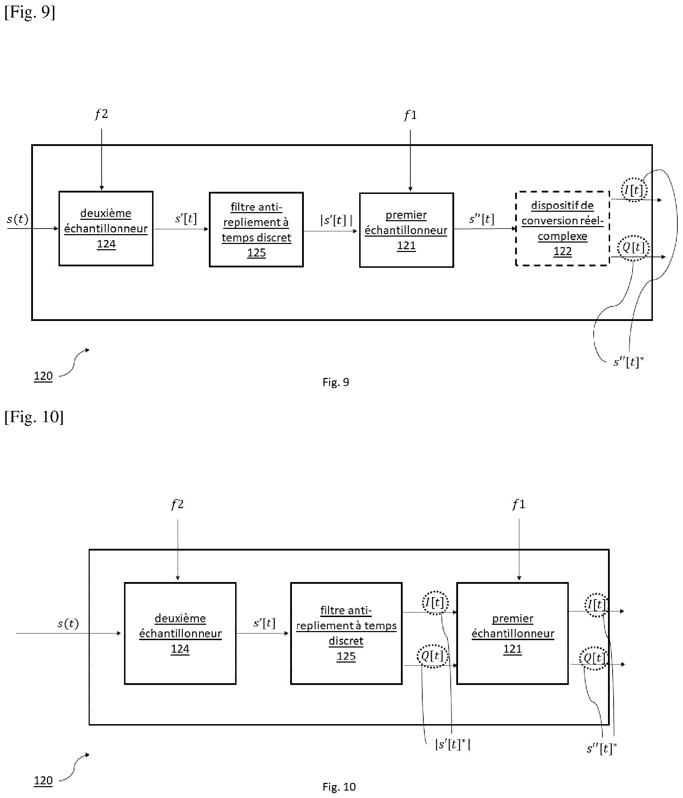

Pour cela, comme illustré sur la figure 9, le récepteur à architecture échantillonnée 120 comprend, en outre, le dispositif de conversion réel-complexe 122 tel que décrit ci-dessus en lien avec la figure 2, et que l'on couple en aval du premier échantillonneur 121.

En particulier, le dispositif de conversion réel-complexe 122 est configuré pour convertir le premier signal échantillonné $s''[t]$, qui est un signal réel, en un signal complexe du type *signal IQ*, tel que décrit ci-dessus.

Dans la figure 9, le dispositif de conversion réel-complexe 122 délivre un signal complexe $s''[t]*$ en réponse à la réception du premier signal échantillonné $s''[t]$. En particulier, le signal complexe $s''[t]*$ comprend une composante en phase $I[t]$ et une composante en quadrature $Q[t]$.

Bien sûr, on peut prévoir que le dispositif de conversion réel-complexe 122 délivre seulement la composante en phase $I[t]$ et omet la composante en quadrature $Q[t]$.

Dans un deuxième mode de réalisation de la cinquième mise en oeuvre particulière de l'invention, il peut être avantageux de faire l'économie du dispositif de conversion réel-complexe 122 décrit ci-dessus.

Pour cela, on peut choisir le filtre anti-repliement à temps discret 125 pour qu'il soit du type passe-bande complexe. Ainsi, en plus de réaliser l'opération de filtrage, un tel filtre est configuré pour filtrer les fréquences négatives. Le signal transposé par le deuxième échantillonneur 124 peut alors être transposé en un signal complexe du type *signal IQ*, tel que décrit ci-dessus. En effet, il n'y aura pas de repliement des fréquences négatives inhérentes aux signaux réels.

La figure 10 comprend les mêmes éléments que sur la figure 8 et illustre un filtre anti-repliement à temps discret 125 du type passe-bande complexe qui délivre un signal de réception complexe échantillonné et filtré $|s'[t]*|$ qui présente une composante en phase $I[t]$ et une composante en quadrature $Q[t]$, en réponse à la réception du deuxième signal échantillonné $s'[t]$,

Par ailleurs, dans la figure 10, le premier échantillonneur 121 est configuré pour échantillonner le signal de réception complexe échantillonné et filtré $|s'[t]*|$, de manière à délivrer un signal échantillonné complexe $s''[t]*$ qui comprend une composante en phase $I[t]$ et la composante en quadrature $Q[t]$.

Dans un troisième mode de réalisation de la cinquième mise en oeuvre particulière de l'invention, il peut être avantageux que la conversion de fréquence par la première fréquence d'échantillonnage $f1$ soit fractionnaire à la place d'un multiple de $f1$.

Pour cela, le récepteur à architecture échantillonnée 120 comprend, en outre, un dispositif de suréchantillonnage du type non-quantificateur, dit suréchantillonneur.

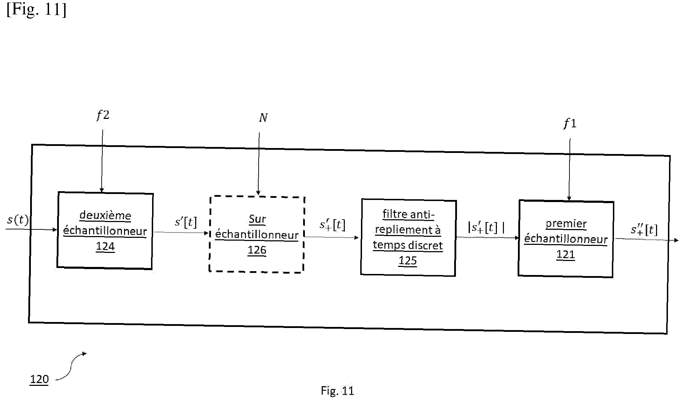

La figure 11 comprend les mêmes éléments que sur la figure 8 et illustre un suréchantillonneur 126 que l'on couple entre le deuxième échantillonneur 124 et le filtre anti-repliement 125.

Le suréchantillonneur 126 permet d'élever le deuxième signal échantillonné $s''[t]$, à une troisième fréquence d'échantillonnage par interpolation et décimation selon un facteur de suréchantillonnage prédéterminé.

En pratique, pour un facteur de suréchantillonnage $N$, le suréchantillonneur 126 insère entre chaque échantillon du deuxième signal échantillonné $s''[t]$, ($N$ - 1) nouveaux échantillons dont la valeur est zéro. Ainsi, le suréchantillonneur 126 délivre en sortie un signal dont la fréquence est $N$ fois plus élevée que celle du deuxième signal échantillonné $s''[t]$ et dont la transformée de Fourier est constituée de $N$ répliques de la transformée de Fourier du signal d'entrée.

En particulier, dans la figure 11, le suréchantillonneur 126, qui présente un facteur de suréchantillonnage $N$, reçoit le deuxième signal échantillonné $s''[t]$ et délivre une version suréchantillonnée $s'_+[t]$ du deuxième signal échantillonné $s''[t]$.

Par ailleurs, le filtre anti-repliement à temps discret 125 est configuré pour délivrer un signal de réception échantillonné et filtré $|s'_+[t]|$ en réponse à la réception du deuxième signal échantillonné $s''[t]$, Par la suite, le premier échantillonneur 121 délivre un premier signal échantillonné $s''_+[t]$, en réponse à la réception du deuxième signal échantillonné et filtré $|s'_+[t]|$, qui est dérivé du signal de réception $s(t)$.

Nous avons décrit et illustré l'invention. Toutefois, l'invention ne se limite pas aux formes de réalisations que nous avons présentées. Ainsi, un expert du domaine peut déduire d'autres variantes et modes de réalisation, à la lecture de la description et des figures annexées.

Dans une première réalisation, le détecteur de métal 100 comprend, en outre, au moins une bobine d'émission agencée pour générer le champ magnétique de détection.

Dans une deuxième réalisation, le détecteur de métal comprend plusieurs récepteurs à architecture échantillonnée 120, dans lequel chaque récepteur à architecture échantillonnée 120 est configuré pour traiter le signal de réception, s(t), à une fréquence de détection particulière, $f_D$.

Dans un exemple de la deuxième réalisation, le détecteur de métal comprend, en outre, des moyens pour sélectionner, de manière automatique ou sur commande de l'utilisateur, la ou les fréquence(s) de détection.

Dans une troisième réalisation, le détecteur de métal comprend, en outre,

- une canne support,
- une tête de détection qui est disposée à une extrémité de la canne support, et qui est configurée pour loger la ou les bobine(s) de réception et/ou la ou les bobine(s) d'émission, et
- au moins un processeur couplé à la tête de détection et configuré pour gérer le fonctionnement de la tête de détection et exploiter les informations qui en sont issues.

Dans un premier exemple de la troisième réalisation, le détecteur de métal comprend, un ou plusieurs processeur(s).

Dans un deuxième exemple de la troisième réalisation, le détecteur de métal comprend, en outre, un boîtier électronique de commande pour loger le ou les processeur(s) et qui est disposé à une autre extrémité de la canne de support.

Dans un troisième exemple de la troisième réalisation, le détecteur de métal comprend, en outre, un casque opérateur qui est couplé à ou aux processeur(s) et qui est configuré pour transmettre à l'opérateur un signal audio de détection qui est représentatif de la détection d'un objet métallique.

L'invention peut faire l'objet de nombreuses variantes et applications autres que celles décrites ci-dessus. En particulier, sauf indication contraire, les différentes caractéristiques structurelles et fonctionnelles de chacune des mises en oeuvre décrite ci-dessus ne doivent pas être considérées comme combinées et/ou étroitement et/ou inextricablement liées les unes aux autres, mais, au contraire, comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Détecteur de métal (100) pour la détection d'au moins un objet métallique exposé à un champ magnétique de détection, le détecteur de métal (100) comprenant :

   - au moins une bobine de réception (110) agencée pour recevoir un signal de champ magnétique, dit signal de réception, $s(t)$, qui est représentatif d'au moins une modification du champ magnétique de détection sous l'influence de l'objet métallique, le signal de réception, $s(t)$, comprenant au moins un canal de détection de largeur de bande prédéterminée, chaque canal de détection étant associé à une fréquence de détection, $f_D$, distincte, et

- au moins un récepteur à architecture échantillonnée (120) qui est couplé à la bobine de réception (110), **caractérisé en ce que**

- le récepteur à architecture échantillonnée (120) comprend un premier dispositif d'échantillonnage du type non-quantificateur, dit premier échantillonneur (121), qui est configuré pour échantillonner le signal de réception,

$s(t)$, ou un signal dérivé du signal de réception, $|s(t)|$, $|s(t)^*|$, $|s'[t]|$, $|s'[t]^*|$, $\left|s'_+[t]\right|$, à une première fréquence d'échantillonnage, $f1$, qui respecte le théorème d'échantillonnage passe-bande de Nyquist-Shannon, de manière à

- délivrer un signal à temps discret, dit premier signal échantillonné, $s[t]$, qui, dans le domaine spectral, correspond à un signal de réplique du signal de réception, $s(t)$, ou du signal dérivé du signal de réception, $s'[t]$, et

- transposer en fréquence le signal de réception, $s(t)$, à une première fréquence intermédiaire qui est inférieure à la fréquence de détection, $f_D$.

2. Détecteur de métal (100) selon revendication 1, dans lequel le récepteur à architecture échantillonnée (120) comprend, en outre, un dispositif de conversion réel-complexe (122) qui est couplé en aval du premier échantillonneur (121), et qui est configuré pour convertir le premier signal échantillonné, $s[t]$, $s''[t]$, en un signal complexe, $s[t]^*$, $s''[t]^*$ qui présente une composante en phase, $I[t]$, et une composante en quadrature, $Q[t]$.

3. Détecteur de métal (100) selon la revendication 2, dans lequel la première fréquence d'échantillonnage, $f1$, respecte la relation suivante :

$$f_D \approx \left(\frac{2*n+1}{4}\right) \times f1,$$

avec $f_D$ la fréquence de détection du canal de détection du signal de réception $s(t)$, $n$ un entier naturel et $f1$ la première fréquence d'échantillonnage,
et dans lequel,
le dispositif de conversion réel-complexe (122) comprend un premier mélangeur à temps discret (1221), un deuxième mélangeur à temps discret (1222), un filtre passe-bas à temps discret (1223), le filtre passe-bas à temps discret (1223) étant couplé,

- en aval du premier mélangeur à temps discret (1221) de manière à délivrer la composante de phase, $I[t]$, et
- en aval du deuxième mélangeur à temps discret (1222) de manière à la composante de quadrature, $Q[t]$.

4. Détecteur de métal (100) selon l'une quelconque des revendications 1 à 3, dans lequel le récepteur à architecture échantillonnée (120) comprend, en outre, un filtre anti-repliement à temps continu (123) qui est couplé en amont du premier échantillonneur (121), le filtre anti-repliement à temps continu (123) présentant une bande passante qui est configurée pour être centrée sur au moins l'une quelconque des fréquences de détection associées au signal de réception, $s(t)$, de manière à limiter la bande passante du signal de réception, $s(t)$, autour d'au moins l'une quelconque des fréquences de détection et délivrer un signal de réception filtré, $|s(t)|$.

5. Détecteur de métal (100) selon l'une quelconque des revendications 1 à 3, dans lequel le récepteur à architecture échantillonnée (120) comprend, en outre,

- un deuxième dispositif d'échantillonnage du type non-quantificateur, dit deuxième échantillonneur (124) couplé en amont du premier échantillonneur (121), et
- un filtre anti-repliement à temps discret (125) couplé entre le premier échantillonneur (121) et le deuxième échantillonneur (124),
dans lequel,
- le deuxième échantillonneur (124) est configuré pour échantillonner le signal de réception, $s(t)$, à une deuxième fréquence d'échantillonnage, $f2$, qui respecte le théorème d'échantillonnage passe-bande de Nyquist-Shannon, de manière à délivrer un signal dérivé du signal de réception, dit deuxième signal échantillonné, $s'[t]$, qui, dans le domaine spectral, correspond à un signal de réplique du signal de réception, $s(t)$, et
- le filtre anti-repliement à temps discret (125) présente une bande passante qui est configurée pour être centrée sur au moins l'une quelconque des fréquences de détection associées au signal de réception, $s(t)$, de manière à limiter la bande passante du deuxième signal échantillonné, $s'[t]$, autour d'au moins l'une quelconque des fréquences de détection et délivrer un signal de réception échantillonné et filtré, $|s'[t]|$,

et dans lequel, la deuxième fréquence d'échantillonnage, $f2$, est en outre configurée pour transposer en fréquence le signal de réception, $s(t)$, à une deuxième fréquence intermédiaire qui est supérieure à la première fréquence intermédiaire et inférieure ou égale à la fréquence de détection $f_D$.

6.  Détecteur de métal (100) selon la revendication 5, comprenant, en outre, un dispositif de suréchantillonnage du type non-quantificateur, dit suréchantillonneur (126) couplé entre le deuxième échantillonneur (124) et le filtre anti-repliement à temps discret (125).

7.  Détecteur de métal (100) selon l'une quelconque des revendications 4 à 6, dans lequel le filtre anti-repliement à temps continu (123) et/ou le filtre anti-repliement à temps discret (125) est un filtre du type passe-bande complexe qui est configuré pour convertir le signal de réception, $s(t)$, ou un signal dérivé du signal de réception, $s'[t]$, en un signal complexe filtré, $|s(t)^*|$, $|s'[t]^*|$ , qui présente une composante en phase, $I[t]$, et une composante en quadrature, $Q[t]$.

8.  Détecteur de métal (100) selon l'une quelconque des revendications 1 à 7, dans lequel le récepteur à architecture échantillonnée (120) comprend, en outre, un quantificateur et un codeur, le quantificateur étant configuré pour quantifier le premier signal échantillonné, $s[t]$, et/ou le deuxième signal échantillonné, $s'[t]$, de manière à délivrer un signal quantifié, le codeur étant configuré pour coder le signal quantifié de manière à délivrer un signal numérique.

9.  Détecteur de métal (100) selon l'une quelconque des revendications 1 à 8, dans lequel la ou les fréquences de détection sont choisies parmi : la bande de fréquences VLF et la bande de fréquences eVLF.

10. Détecteur de métal (100) selon l'une quelconque des revendications 1 à 9, comprenant, en outre, au moins une bobine d'émission agencée pour générer le champ magnétique de détection.

11. Détecteur de métal (100) selon l'une quelconque des revendications 1 à 10, comprenant plusieurs récepteurs à architecture échantillonnée (120), dans lequel chaque récepteur à architecture échantillonnée (120) est configuré pour traiter le signal de réception, $s(t)$, à une fréquence de détection particulière, $f_D$.

12. Détecteur de métal (100) selon la revendication 11, comprenant, en outre, des moyens pour sélectionner, de manière automatique ou sur commande de de l'utilisateur, la ou les fréquence(s) de détection.

13. Détecteur de métal (100) selon l'une quelconque des revendications 1 à 12, comprenant, en outre,

    - une canne support,
    - une tête de détection qui est disposée à une extrémité de la canne support, et qui est configurée pour loger la ou les bobine(s) de réception et/ou la ou les bobine(s) d'émission, et
    - au moins un processeur couplé à la tête de détection et configuré pour gérer le fonctionnement de la tête de détection et exploiter les informations qui en sont issues.

**Patentansprüche**

1.  Metalldetektor (100) zum Erfassen mindestens eines Metallobjekts, das einem Erfassungsmagnetfeld ausgesetzt wird, wobei der Metalldetektor (100) umfasst:

    - mindestens eine Empfangsspule (110), die eingerichtet ist, um ein Magnetfeldsignal, bezeichnet als Empfangssignal, $s(t)$, zu empfangen, das für mindestens eine Änderung des Erfassungsmagnetfelds unter dem Einfluss des Metallobjekts repräsentativ ist, wobei das Empfangssignal, $s(t)$, mindestens einen Erfassungskanal mit einer vorbestimmten Bandbreite umfasst, wobei jeder Erfassungskanal einer verschiedenen Erfassungsfrequenz, $f_D$, zugeordnet ist, und
    - mindestens einen Empfänger mit Abtastarchitektur (120), der mit der Empfangsspule (110) gekoppelt ist, **dadurch gekennzeichnet, dass**
    - der Empfänger mit Abtastarchitektur (120) eine erste Abtastvorrichtung vom Nicht-Quantisierer-Typ, bezeichnet als erster Abtaster (121), umfasst, der ausgelegt ist, um das Empfangssignal, s(t), oder ein vom Empfangssignal abgeleitetes Signal, |s(t)|, |s(t)*|, |s'[t]|, |s'[t]*|, |s'+[t]|, mit einer ersten Abtastfrequenz, $f1$, abzutasten, die das Nyquist-Shannon-Bandpass-Abtasttheorem respektiert, um

- ein zeitdiskretes Signal, bezeichnet als erstes abgetastetes Signal, s[t], bereitzustellen, das im Spektralbereich einem Repliksignal des Empfangssignals, s(t), oder des vom Empfangssignal abgeleiteten Signals, s'[t], entspricht, und

- das Empfangssignal, s(t), in eine erste Zwischenfrequenz, die niedriger ist als die Erfassungsfrequenz, $f_D$, frequenzumzusetzen.

2. Metalldetektor (100) nach Anspruch 1, wobei der Empfänger mit Abtastarchitektur (120) ferner eine Real-Komplex-Wandlervorrichtung (122) umfasst, die nach dem ersten Abtasters (121) gekoppelt ist und die ausgelegt ist, um das erste abgetastete Signal, s[t], s''[t], in ein komplexes Signal, s[t]*, s''[t]*, umzuwandeln, das eine Phasenkomponente, I[t], und eine Quadraturkomponente, Q[t], aufweist.

3. Metalldetektor (100) nach Anspruch 2, wobei die erste Abtastfrequenz, f1, die folgende Gleichung erfüllt:

$$f_D \approx \left(\frac{2*n+1}{4}\right) \times f1,$$

mit $f_D$ als Erfassungsfrequenz des Erfassungskanals des Empfangssignals s(t), $n$ als eine natürliche Zahl und $f1$ als die erste Abtastfrequenz,
und wobei
die Real-Komplex-Wandlervorrichtung (122) einen ersten zeitdiskreten Mischer (1221), einen zweiten zeitdiskreten Mischer (1222), einen zeitdiskreten Tiefpassfilter (1223) umfasst, wobei der zeitdiskrete Tiefpassfilter (1223) gekoppelt ist,

- nach dem ersten zeitdiskreten Mischer (1221), um die Phasenkomponente, I[t], bereitzustellen, und
- nach dem zweiten zeitdiskreten Mischer (1222), um die Quadraturkomponente, Q[t], bereitzustellen.

4. Metalldetektor (100) nach einem der Ansprüche 1 bis 3, wobei der Empfänger mit Abtastarchitektur (120) ferner einen zeitkontinuierliches Anti-Aliasing-Filter (123) umfasst, der vor dem ersten Abtaster (121) gekoppelt ist, wobei der zeitkontinuierliche Anti-Aliasing-Filter (123) eine Bandbreite aufweist, die ausgelegt ist, um auf mindestens eine beliebige der dem Empfangssignal, s(t), zugeordneten Erfassungsfrequenzen zentriert zu sein, um die Bandbreite des Empfangssignals, s(t), um mindestens eine beliebige der Erfassungsfrequenzen herum zu begrenzen und ein gefiltertes Empfangssignal, |s(t)|, bereitzustellen.

5. Metalldetektor (100) nach einem der Ansprüche 1 bis 3, wobei der Empfänger mit Abtastarchitektur (120) ferner umfasst:

- eine zweite Abtastvorrichtung vom Nicht-Quantisierer-Typ, bezeichnet als zweiter Abtaster (124), der vor dem ersten Abtaster (121) gekoppelt ist, und
- einen zeitdiskreten Anti-Aliasing-Filter (125), der zwischen den ersten Abtaster (121) und den zweiten Abtaster (124) gekoppelt ist,
wobei
- der zweite Abtaster (124) ausgelegt ist, um das Empfangssignal, s(t), mit einer zweiten Abtastfrequenz, $f2$, abzutasten, die das Nyquist-Shannon-Bandpass-Abtasttheorem respektiert, um ein vom Empfangssignal abgeleitetes Signal, bezeichnet als zweites abgetastetes Signal, s'[t], bereitzustellen, das im Spektralbereich einem Repliksignal des Empfangssignals, s(t), entspricht, und
- der zeitdiskrete Anti-Aliasing-Filter (125) eine Bandbreite aufweist, die ausgelegt ist, um auf mindestens eine beliebige der dem Empfangssignal, s(t), zugeordneten Erfassungsfrequenzen zentriert zu sein, um die Bandbreite des zweiten gesampelten Signals, s'[t], um mindestens eine beliebige der Erfassungsfrequenzen herum zu begrenzen und ein abgetastetes und gefiltertes Empfangssignal, |s'[t]|, bereitzustellen,

und wobei die zweite Abtastfrequenz, $f2$, ferner ausgelegt ist, um das Empfangssignal, s(t), in eine zweite Zwischenfrequenz, die höher als die erste Zwischenfrequenz und niedriger oder gleich der Erfassungsfrequenz $f_D$ ist, frequenzumzusetzen.

6. Metalldetektor (100) nach Anspruch 5, umfassend ferner eine Überabtastvorrichtung vom Nicht-Quantisierer-Typ, bezeichnet als Überabtaster (126), die zwischen dem zweiten Abtaster (124) und dem zeitdiskreten Anti-Aliasing-Filter (125) gekoppelt ist.

7. Metalldetektor (100) nach einem der Ansprüche 4 bis 6, wobei der zeitkontinuierliche Anti-Aliasing-Filter (123) und/oder der zeitdiskrete Anti-Aliasing-Filter (125) ein Filter vom Typ komplexer Bandpass ist, der ausgelegt ist, um das Empfangssignal, $s(t)$, oder ein vom Empfangssignal abgeleitetes Signal, $s'[t]$, in ein gefiltertes komplexes Signal, $|s(t)^*|$, $|s'[t]^*|$, umzuwandeln, das eine Phase-Komponente, $I[t]$, und eine Quadratur-Komponente, $Q[t]$, aufweist.

8. Metalldetektor (100) nach einem der Ansprüche 1 bis 7, wobei der Empfänger mit Abtastarchitektur (120) zusätzlich einen Quantisierer und einen Codierer umfasst, wobei der Quantisierer ausgelegt ist, um das erste abgetastete Signal, $s[t]$, und/oder das zweite abgetastete Signal, $s'[t]$, derart zu quantifizieren, dass ein quantifiziertes Signal bereitgestellt wird, und der Codierer ausgelegt ist, um das quantifizierte Signal derart zu codieren, dass ein digitales Signal bereitgestellt wird.

9. Metalldetektor (100) nach einem der Ansprüche 1 bis 8, wobei die Erfassungsfrequenz(en) ausgewählt ist/sind aus: dem VLF-Frequenzband und dem eVLF-Frequenzband.

10. Metalldetektor (100) nach einem der Ansprüche 1 bis 9, umfassend ferner mindestens eine Sendespule, die eingerichtet ist, um das magnetische Erfassungsfeld zu erzeugen.

11. Metalldetektor (100) nach einem der Ansprüche 1 bis 10, umfassend mehrere Empfänger mit Abtastarchitektur (120), wobei jeder Empfänger mit Abtastarchitektur (120) ausgelegt ist, um das Empfangssignal, $s(t)$, mit einer bestimmten Erfassungsfrequenz, $f_D$, zu verarbeiten.

12. Metalldetektor (100) nach Anspruch 11, umfassend ferner Mittel zum automatischen oder benutzergesteuerten Auswählen der Erfassungsfrequenz(en).

13. Metalldetektor (100) nach einem der Ansprüche 1 bis 12, der ferner umfasst

- einen Tragestock,
- einen Erfassungskopf, der an einem Ende des Tragestocks angeordnet und ausgelegt ist, um die Empfangsspule(n) und/oder die Sendespule(n) aufzunehmen, und
- mindestens einen Prozessor, der mit dem Erfassungskopf gekoppelt und ausgelegt ist, um den Betrieb des Erfassungskopfes zu verwalten und die von ihm gelieferten Informationen auszuwerten.

**Claims**

1. A metal detector (100) for detecting at least one metallic object exposed to a detection magnetic field, the metal detector (100) comprising:

- at least one reception coil (110) arranged to receive a magnetic field signal, called reception signal, $s(t)$, which is representative of at least one modification of the detection magnetic field under the influence of the metallic object, the reception signal, $s(t)$, comprising at least one detection channel of given bandwidth, each detection channel being associated with a separate detection frequency, $f_D$, and
- at least one sampled-architecture receiver (120) which is coupled to the reception coil (110),

**characterized in that**

- the sampled-architecture receiver (120) comprises a first sampling device of non-quantizing type, called first sampler (121), which is configured to sample the reception signal, $s(t)$, or a signal that is a derivative of the reception signal, $|s(t)|$, $|s(t)^*|$, $|s'[t]|$, $|s'[t]^*|$, $|s'_+[t]|$, at a first sampling frequency, $f_1$, which observes the Nyquist-Shannon bandwidth sampling theorem, in such a way as to
- deliver a discrete-time signal, called first sampled signal, $s[t]$, which, in the spectral domain, corresponds to a replica signal of the reception signal, $s(t)$, or of the signal that is a derivative of the reception signal, s'[t], and
- frequency-transpose the reception signal, $s(t)$, to a first intermediate frequency which is less than the detection frequency, $f_D$.

2. The metal detector (100) as claimed in claim 1, wherein the sampled-architecture receiver (120) further comprises a real-to-complex conversion device (122) which is coupled downstream of the first sampler (121), and which is configured to convert the first sampled signal, $s[t]$, $s''[t]$, into a complex signal, $s[t]^*$, $s''[t]^*$ which has an in-phase component, $I[t]$, and a quadrature component, $Q[t]$.

3. The metal detector (100) as claimed in claim 2, wherein the first sampling frequency, $f1$, observes the following relationship:

$$f_D \approx \left( \frac{2*n+1}{4} \right) \times f1,$$

with $f_D$ the detection frequency of the detection channel of the reception signal $s(t)$, $n$ a natural integer and $f1$ the first sampling frequency,
and wherein,
the real-to-complex conversion device (122) comprises a first discrete-time mixer (1221), a second discrete-time mixer (1222), a discrete-time low-pass filter (1223), the discrete-time low-pass filter (1223) being coupled,

- downstream of the first discrete-time mixer (1221) in such a way as to deliver the in-phase component, $I[t]$, and
- downstream of the second discrete-time mixer (1222) in such a way as to deliver the quadrature component, $Q[t]$.

4. The metal detector (100) as claimed in any of claims 1 to 3, wherein the sampled-architecture receiver (120) further comprises a continuous-time anti-aliasing filter (123) which is coupled upstream of the first sampler (121), the continuous-time anti-aliasing filter (123) having a bandwidth which is configured to be centered on at least any one of the detection frequencies associated with the reception signal, $s(t)$, in such a way as to limit the bandwidth of the reception signal, $s(t)$, around at least any one of the detection frequencies and to deliver a filtered reception signal, $|s(t)|$.

5. The metal detector (100) as claimed in any of claims 1 to 3, wherein the sampled-architecture receiver (120) further comprises,

- a second sampling device of non-quantizing type, said second sampler (124) coupled upstream of the first sampler (121), and
- a discrete-time anti-aliasing filter (125) coupled between the first sampler (121) and the second sampler (124),

wherein,

- the second sampler (124) is configured to sample the reception signal, $s(t)$, at a second sampling frequency, $f2$, which observes the Nyquist-Shannon bandwidth sampling theorem, such as to deliver a signal that is a derivative of the reception signal, called second sampled signal, $s'[t]$, which, in the spectral domain, corresponds to a replica signal of the reception signal, $s(t)$, and
- the discrete-time anti-aliasing filter (125) has a bandwidth which is configured to be centered on at least any one of the detection frequencies associated with the reception signal, $s(t)$, in such a way as to limit the bandwidth of the second sampled signal, $s'[t]$, around at least any one of the detection frequencies and to deliver a sampled and filtered reception signal, $|s'[t]|$,

and wherein, the second sampling frequency, $f2$, is furthermore configured to frequency-transpose the reception signal, $s(t)$, to a second intermediate frequency which is greater than the first intermediate frequency and less than or equal to the detection frequency $f_D$.

6. The metal detector (100) as claimed in claim 5, further comprising an oversampling device of non-quantizing type, called oversampler (126) coupled between the second sampler (124) and the discrete-time anti-aliasing filter (125).

7. The metal detector (100) as claimed in any of claims 4 to 6, wherein the continuous-time anti-aliasing filter (123) and/or the discrete-time anti-aliasing filter (125) is a filter of complex bandpass type which is configured to convert the reception signal, $s(t)$, or a signal that is a derivative of the reception signal, $s'[t]$, into a filtered complex signal, $|s(t)*|$, $|s'[t]*|$, which has an in-phase component, $I[t]$, and a quadrature component, $Q[t]$.

8. The metal detector (100) as claimed in any of claims 1 to 7, wherein the sampled-architecture receiver (120) further comprises a quantizer and an encoder, the quantizer being configured to quantize the first sampled signal, $s[t]$, and/or the second sampled signal, $s'[t]$, in such a way as to deliver a quantized signal, the encoder being configured to encode the quantized signal in such a way as to deliver a digital signal.

9. The metal detector (100) as claimed in any of claims 1 to 8, wherein the detection frequency or frequencies are chosen from among: the VLF frequency band and the eVLF frequency band.

10. The metal detector (100) as claimed in any of claims 1 to 9, further comprising at least one transmission coil arranged to generate the detection magnetic field.

11. The metal detector (100) as claimed in any of claims 1 to 10, comprising several sampled-architecture receivers (120), in which each sampled-architecture receiver (120) is configured to process the reception signal, s(t), at a particular detection frequency, $f_D$.

12. The metal detector (100) as claimed in claim 11, further comprising means for selecting, automatically or at the command of the user, the detection frequency or frequencies.

13. The metal detector (100) as claimed in any of claims 1 to 12, further comprising,

    - a support stick,
    - a detection head which is disposed at one end of the support stick, and which is configured to house the reception coil(s) and/or the transmission coil(s), and
    - at least one processor coupled to the detection head and configured to manage the operation of the detection head and make use of the information coming from it.

[Fig. 1]

Fig. 1

[Fig. 2]

Fig. 2

[Fig. 3]

Fig. 3

[Fig. 4]

Fig. 4

[Fig. 5]

-1 0 1 0 …

premier mélangeur à
temps discret
1221

filtre passe-bas à
temps discret
1223

$I[t]$

$s[t]$

deuxième mélangeur
à temps discret
1222

$Q[t]$

$s[t]^*$

0 1 0 -1 …

122

Fig. 5

[Fig. 6]

$f1$

filtre anti-
repliement à temps
continu
123

$s(t)$

$|s(t)|$

premier
échantillonneur
121

$s[t]$

120

Fig. 6

[Fig. 7]

$f1$

filtre anti-
repliement à temps
continu
123

$s(t)$

$I(t)$

$Q(t)$

premier
échantillonneur
121

$I[t]$

$Q[t]$

$|s(t)^*|$

$s[t]^*$

120

Fig. 7

[Fig. 8]

$f2$

$f1$

$s(t)$

deuxième
échantillonneur
124

$s'[t]$

filtre anti-
repliement à temps
discret
125

$|s'[t]|$

premier
échantillonneur
121

$s''[t]$

120

Fig. 8

[Fig. 9]

$f2$

$f1$

deuxième
échantillonneur
124

$s(t)$ → deuxième échantillonneur 124 → $s'[t]$

filtre anti-
repliement à
temps discret
125

$|s'[t]|$

premier
échantillonneur
121

$s''[t]$

dispositif de
conversion réel-
complexe
122

$I[t]$

$Q[t]$

$s''[t]^*$

120

Fig. 9

[Fig. 10]

$f2$

$f1$

$s(t)$ →

deuxième
échantillonneur
124

$s'[t]$

filtre anti-
repliement à temps
discret
125

$I[t]$

$Q[t]$

premier
échantillonneur
121

$I[t]$

$Q[t]$

$|s'[t]^*|$

$s''[t]^*$

120

Fig. 10

[Fig. 11]

$f2$            $N$            $f1$

$s(t)$ → | deuxième échantillonneur **124** | $s'[t]$ → | Sur échantillonneur **126** | $s'_+[t]$ → | filtre anti-repliement à temps discret **125** | $|s'_+[t]|$ → | premier échantillonneur **121** | $s''_+[t]$ →

120

Fig. 11

## RÉFÉRENCES CITÉES DANS LA DESCRIPTION

**Documents brevets cités dans la description**

- US 2019377100 A1